Europäisches Patentamt

European Patent Office

Office européen des brevets

(19)

(11) **EP 1 217 679 A1**

(12) **EUROPÄISCHE PATENTANMELDUNG**

(43) Veröffentlichungstag:
**26.06.2002 Patentblatt 2002/26**

(51) Int Cl.⁷: **H01M 8/10**, H01M 8/18, H01M 8/20

(21) Anmeldenummer: **01127976.7**

(22) Anmeldetag: **24.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.12.2000 DE 10063655**

(71) Anmelder: **Ballard Power Systems AG 73230 Kirchheim / Teck-Nabern (DE)**

(72) Erfinder: **Keppeler, Berthold, Dr. 73277 Owen (DE)**

(74) Vertreter: **Kocher, Klaus-Peter, Dipl.-Phys et al DaimlerChrysler AG, Intellectual Property Management, FTP-C 106 70546 Stuttgart (DE)**

(54) **Brennstoffzelle und Verfahren zum Betreiben einer solchen**

(57) Eine Brennstoffzelle mit einem Anodenraum (2), einem Kathodenraum (3) und einer protonenpermeablen Membran (4) zwischen Anoden- und Kathodenraum. Dadurch, daß der Anodenraum eine hydridbildende und/oder Wasserstoff einlagernde und der Kathodenraum eine leicht oxidierbare Verbindung (oder Stoff) aufweist, kann während des Normalbetriebs der Brennstoffzelle diese elektrochemisch aufgeladen werden, so daß die elektrochemische Kapazität in Form eines Batteriebetriebs der Brennstoffzelle zur Energieversorgung verwendet werden kann.

Figur

EP 1 217 679 A1

**Beschreibung**

Die Erfindung betrifft eine Brennstoffzelle und ein Verfahren zum Betreiben einer solchen gemäß Oberbegriff des Patentanspruchs 1 bzw. 4.

Brennstoffzellen dienen zur Erzeugung elektrischer Energie aus chemischen Prozessen, wobei zum Erzielen einer signifikanten elektrischen Leistung mehrere einzelne Brennstoffzellen zu einem Stack zusammengeschaltet werden. Brennstoffzellen oder Brennstoffzellensysteme lassen sich allgemein in einen Anodenund einen Kathodenraum einteilen, die durch eine protonenleitende Membran voneinander getrennt sind. Zum Betrieb der Brennstoffzelle wird sauerstoffhaltiges Gas wie Luft dem Kathodenraum und ein Brennmittel dem Anodenraum zugeführt. Als Brennmittel dient meist Wasserstoff, der sich unter Abgabe von Elektronen in Wasserstoffionen (Protonen) aufspaltet und durch die Membran in den Kathodenraum übertritt, wo mit dem zugeführten Sauerstoff eine Umsetzung zu Wasser erfolgt. Der zuzuführende Wasserstoff kann beispielsweise durch Reformierung von Kohlenwasserstoffen erzeugt werden. Bei sogenannten Direkt-Methanol-Brennstoffzellen (DMFC) wird Methanol als flüssiges Brennmittel zusammen mit einem Kühlmittel wie Wasser dem Anodenraum zugeleitet. In diesem Fall entsteht am Anodenausgang ein mit Wasser und Methanol angereichertes Kohlendioxidgas mit Resten von Wasserstoff.

Soll ein Brennstoffzellensystem zur Stromerzeugung beispielsweise in einem Fahrzeug dienen, sind Frostsicherheit und Kaltstarttauglichkeit wesentliche Kriterien für die Alltagstauglichkeit eines solchen Systems. Aufgrund des vorhandenen bzw. erzeugten Wassers bei den erwähnten Brennstoffzellen besteht bei tiefen Temperaturen die Gefahr des Gefrierens, insbesondere wenn die Brennstoffzelle nicht im Betrieb ist. Auch die in der Regel feuchten Membrane können dann einfrieren. Das System muß daher vorgeheizt werden, wodurch es zu einer langen Kaltstartphase und zusätzlichem Energieverbrauch aus weiter vorzusehenden Energiequellen kommt.

In der EP-0 406 831 B1 wird ein Hybridsystem für den elektrischen Antrieb von Kraftfahrzeugen bestehend aus einer Kombination von Brennstoffzelle und Batterie behandelt. Die Brennstoffzelle soll dabei ausreichend Energie für den Normalbetrieb, die Batterie hingegen Energie für Spitzenbelastungen zur Verfügung stellen. Anstelle der Brennstoffzelle kann auch eine weitere Batterie verwendet werden. Die in der EP-0 406 831 B1 vorgeschlagene Batterie zur Versorgung bei Spitzenbelastungen besitzt eine Kammer positiver und eine Kammer negativer Polarität, die durch eine protonenleitende Membran voneinander getrennt sind. In der Aufladephase wird Wasser elektrolytisch in Wasserstoff und Sauerstoff zerlegt, die in den jeweiligen Kammern der Batterie gespeichert bleiben, bis sie für die Entladephase benötigt werden. Beim Entladen der Batterie wird wieder Wasser gebildet.

Derartige Hybridsysteme erweisen sich wegen der zusätzlich verwendeten Batterie und dem damit verbundenen konstruktiven Aufwand von zusätzlichen Zu- und Ableitungen für die Reaktionsedukte und -produkte sowie elektrischen Anschlüssen als nachteilig. Außerdem wird ein Steuerkreis benötigt, um je nach Bedarf von der Brennstoffzelle zur Batterie und zurück zu schalten.

Aufgabe vorliegender Erfindung ist, eine Brennstoffzelle und ein Verfahren zum Betreiben einer solchen anzugeben, durch die genannten Nachteile des Standes der Technik überwunden und, insbesondere für den Fahrzeugantrieb, ein gutes Kaltstartverhalten, ausreichender Frostschutz und ausreichende Energieversorgung bei Spitzenbelastungen garantiert werden.

Diese Aufgabe wird erfindungsgemäß durch die Merkmale der Ansprüche 1 bzw. 4 gelöst.

Erfindungsgemäß ist im Anodenraum der Brennstoffzelle ein hydridbildender Stoff vorgesehen, durch den Wasserstoff gebunden werden kann. Zusätzlich oder anstelle des hydridbildenden Stoffes kann ein Wasserstoff einlagernder Stoff zur Anwendung kommen, in dem Wasserstoff gespeichert wird. Im Kathodenraum ist erfindungsgemäß ein leicht oxidierbarer Stoff vorgesehen. Mit der erfindungsgemäßen Brennstoffzelle ist es möglich, während des Normalbetriebs, bei dem der Anode ein wasserstoffhaltiger Brennstoff und der Kathode ein sauerstoffhaltiges Oxidationsmittel zugeführt werden, die Brennstoffzelle elektrochemisch aufzuladen. Dies geschieht durch Einlagerung von Wasserstoff bzw. durch Hydridbildung auf der Anodenseite und durch Oxidationsprozesse auf der Kathodenseite. Die elektrochemisch aufgeladene Brennstoffzelle kann nach Normalbetrieb, aber auch während des Normalbetriebs, als Batterie betrieben werden. Dabei kann der anodenseitig gebundene Wasserstoff freigesetzt werden und an der Membran im Kathodenraum für Reduktionsprozesse sorgen, durch die der leicht oxidierbare Ausgangsstoff wiederhergestellt wird.

Folgende Vorteile lassen sich durch die Erfindung erzielen: Da die erfindungsgemäße Brennstoffzelle selbst als Batterie eingesetzt werden kann, ist keine zusätzliche Batterie, wie bei den bekannten Hybridsystemen, erforderlich. Hierdurch entfällt der zusätzliche Aufwand von Zusatzleitungen, Zusatzanschlüssen und eines Steuersystems.

Nach Betrieb der Brennstoffzelle (oder des Brennstoffzellensystems) ist die Brennstoffzelle (oder die Brennstoffzellen des Stacks) wie eine Batterie elektrochemisch aufgeladen. Zu einem späteren Zeitpunkt kann dann die für einen Kaltstart (eines Fahrzeugs) erforderliche Energie direkt aus der als Batterie betriebenen Brennstoffzelle entnommen werden.

Im Batteriebetrieb heizt sich die Brennstoffzelle selbst auf, so daß bisher notwendige Vorheizsysteme entfallen können, durch die die Katalysatoren der Brennstoffzellen auf die erforderliche Betriebstemperatur gebracht werden.

Die Brennstoffzelle kann auch während des Normalbetriebs zusätzlich als Batterie betrieben werden, wenn etwa ein Überlastbetrieb mit erhöhter Leistungsanforderung vorliegt, beispielsweise ein Überholvorgang beim Fahrzeugantrieb.

Außerdem bietet die erfindungsgemäße Brennstoffzelle ausreichenden Frostschutz bei niedrigen Umgebungstemperaturen nach dem Brennstoffzellenbetrieb, da durch die Anwesenheit des Hydrids im Anodenraum an der Membran dort vorhandenes Wasser durch Hydroxidbildung und Wasserstofferzeugung abgebaut wird. Die in der Regel feuchten Membrane der Brennstoffzellen werden dadurch getrocknet.

Für die Erfindung geeignete hydridbildende bzw. Wasserstoff einlagernde Stoffe stellen Metalle oder Metallverbindungen dar, insbesondere Übergangsmetalle wie Lanthaniden. Als günstig hat sich der Einsatz von Co-dotiertem $LaNi_5$ erwiesen.

Als leicht oxidierbarer Stoff kann eine Hydroxidverbindung in den Kathodenraum eingebracht werden. Beispielsweise ein Metallhydroxid, wobei als Metall wiederum ein Übergangsmetall (Lanthanid) Verwendung finden kann. $Ni(OH)_2$ hat sich als besonders geeignet erwiesen.

Die genannten Stoffe werden zusätzlich in die jeweils vorhandenen Katalysatoren des Anoden- und Kathodenraums eingebracht. Günstig ist eine gemeinsame Herstellung.

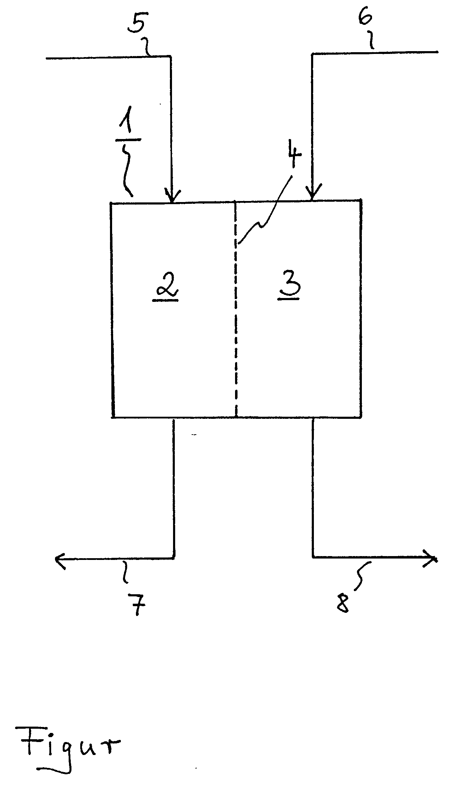

Im folgenden soll ein Ausführungsbeispiel anhand der beigefügten Figur die Erfindung und ihre Vorteile näher erläutern.

Die einzige Figur zeigt schematisch ein Brennstoffzellensystem für den Kraftfahrzeugantrieb.

Das Brennstoffzellensystem 1 besteht aus einem Stack zusammengeschalteter Brennstoffzellen und läßt sich allgemein in einen Anodenraum 2 und einen Kathodenraum 3 unterteilen, die durch eine protonenleitende Membran 4 getrennt sind. Über die Zuleitung 5 gelangt Brennstoff in den Anodenraum 2, während über die Zuleitung 6 Oxidationsmittel dem Kathodenraum 3 zugeführt wird.

Als Brennstoff werden meist Wasserstoff oder Methanol bei Brennstoffzellensystemen für den Fahrzeugantrieb eingesetzt.

Der Wasserstoff kann durch eine vorgeschaltete Reformierungsstufe erzeugt werden. Im vorliegenden Ausführungsbeispiel wird ein wasserstoffhaltiges Gas über die Zuleitung 5 dem Anodenraum 2 zugeführt. In Luft enthaltener Sauerstoff wird als Oxidationsmittel über die Zuleitung 6 dem Kathodenraum 3 zugeführt.

Ein Teil des Wasserstoffs verläßt den Anodenraum 2 wieder über Leitung 7, während erzeugtes Wasser den Kathodenraum 3 über die Leitung 8 verläßt.

Erfindungsgemäß ist der Anodenraum 2 mit einer Metallverbindung M, hier beispielsweise $LaNi_5$, der Kathodenraum mit einem Metallhydroxid, hier beispielsweise $Ni(OH)_2$, versehen.

Während des Betriebs des Brennstoffzellensystems 1 erfolgt dann eine elektrochemische Aufladung gemäß folgenden Gleichungen:

$$Ni(OH)_2 + 1/2 O_2 \rightarrow NiOOH + OH^- \qquad (1)$$

$$M(z.B. = LaNi_5) + 1/2 H_2 \rightarrow MH \qquad (2)$$

Nach dem Betrieb, d.h. bei Unterbrechung der Gaszufuhr über die Leitungen 5 und 6, kann das Brennstoffzellensystem als Batterie betrieben werden und Strom ohne weitere Wasserstoff- und Luftversorgung produzieren. Während des Batteriebetriebs wird Wasserstoff auf der Anodenseite abgespalten und führt zu einer Reduktionsreaktion im Kathodenraum 3, wodurch die Gleichung (1) in anderer Richtung abläuft. Nach Entladen der "Batterie" sind die Ausgangsstoffe der Gleichungen (1) und (2) wiederhergestellt.

Das erfindungsgemäße Brennstoffzellensystem 1 stellt eine ausreichende Energieversorgung bei Peak-Anforderungen sicher, beispielsweise bei Überholvorgängen oder Betrieb unter hoher Last. Die zusätzlich benötigte Energie kann dann während des Normalbetriebs des Brennstoffzellensystems 1 aus der bereits aufgebauten elektrochemischen Kapazität entnommen werden.

Da beim Normalbetrieb des Brennstoffzellensystems 1 im Kathodenraum 3 Wasser erzeugt wird, besteht nach Abschalten des Systems Gefriergefahr, insbesondere an der Membran 4. Bei der erfindungsgemäßen Brennstoffzelle kann jedoch vor einem Einfrieren des Wassers dieses gemäß folgender Gleichung abgebaut werden:

$$MH + H_2O \rightarrow MOH + H_2$$

Das Brennstoffzellensystem 1 ist somit Freezing-tauglich und weist verbesserte Kaltstarteigenschaften auf. Zudem kann die für einen Kaltstart benötigte Energie direkt aus dem elektrochemisch aufgeladenen Brennstoffzellensystem 1 bezogen werden. Nach dem Kaltstart heizt sich die Brennstoffzelle im Batteriebetrieb selbst auf, wodurch externe Heizquellen entfallen können.

Die Erfindung eignet sich folglich in hohem Maße für Brennstoffzellensysteme im Kraftfahrzeugbereich und führt dort zu erheblichen Einsparungen.

**Patentansprüche**

1.  Brennstoffzelle mit einem Anodenraum (2), einem Kathodenraum (3) und einer beide Räume trennenden protonenleitenden Membran (4),

**dadurch gekennzeichnet,**
**daß** der Anodenraum (2) einen hydridbildenden und/oder einen Wasserstoff einlagernden Stoff und der Kathodenraum (3) einen leicht oxidierbaren Stoff aufweist.

2. Brennstoffzelle nach Anspruch 1,
**dadurch gekennzeichnet,**
**daß** der hydridbildende bzw. Wasserstoff einlagernde Stoff ein Metall oder eine Metallverbindung, insbesondere eine Verbindung aus Übergangsmetallen, wie beispielsweise Co-dotiertes $LaNi_5$. darstellt.

3. Brennstoffzelle nach Anspruch 1 oder 2,
**dadurch gekennzeichnet,**
**daß** der leicht oxidierbare Stoff eine. Hydroxidverbindung eines Metalls, insbesondere eines Übergangsmetalls, wie beispielsweise $Ni(OH)_2$, darstellt.

4. Verfahren zum Betreiben einer Brennstoffzelle gemäß einem der Ansprüche 1 bis 3,
**dadurch gekennzeichnet,**
**daß** die Brennstoffzelle durch Zufuhr von Wasserstoff zum Anodenraum (2) und eines Oxidationsmittels wie Luftsauerstoff zum Kathodenraum (3) zur Stromerzeugung betrieben und dabei gleichzeitig elektrochemisch aufgeladen wird.

5. Verfahren nach Anspruch 4,
**dadurch gekennzeichnet,**
**daß** die elektrochemisch aufgeladene Brennstoffzelle ohne Zufuhr von Wasserstoff oder Luftsauerstoff als Batterie betrieben wird.

6. Kraftfahrzeug mit einem System aus Brennstoffzellen gemäß einem der Ansprüche 1 bis 3 zur Bereitstellung von Energie.

Figur

**Europäisches Patentamt**

# EUROPÄISCHER RECHERCHENBERICHT

Nummer der Anmeldung

EP 01 12 7976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 12 80 361 B (AKTIENGESELLSCHAFT BROWN BOVERI & CIE) 17. Oktober 1968 (1968-10-17) * Spalte 1 - Spalte 5 * | 1-6 | H01M8/10 H01M8/18 H01M8/20 |
| X,P | US 2001/033959 A1 (VENKATESAN SRINIVASAN ET AL) 25. Oktober 2001 (2001-10-25) * das ganze Dokument * | 1-6 | |
| X,P | WO 00 79623 A (PROCYON POWER SYSTEMS INC ;MANIKOWSKI AMBROSE F (US)) 28. Dezember 2000 (2000-12-28) * Ansprüche 17-19,22; Beispiel 3 * | 1-3,6 | |
| A | WO 00 52779 A (MOTOROLA INC) 8. September 2000 (2000-09-08) * Seite 3, Zeile 28 - Seite 4, Zeile 9; Anspruch 3 * | 2 | |
| A | US 4 318 968 A (BERGER MICHEL ET AL) 9. März 1982 (1982-03-09) * Spalte 2, Zeile 53 - Spalte 3, Zeile 16 * | 3 | RECHERCHIERTE SACHGEBIETE (Int.Cl.7) H01M |

Der vorliegende Recherchenbericht wurde für alle Patentansprüche erstellt

| Recherchenort | Abschlußdatum der Recherche | Prüfer |
|---|---|---|
| DEN HAAG | 7. März 2002 | D'hondt, J |

**ANHANG ZUM EUROPÄISCHEN RECHERCHENBERICHT
ÜBER DIE EUROPÄISCHE PATENTANMELDUNG NR.**                      EP 01 12 7976

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 1280361 | B | | CH<br>BE<br>FR<br>GB<br>NL<br>US | 402091 A<br>648481 A<br>1397676 A<br>1018345 A<br>6403627 A<br>3338746 A | 15-11-1965<br>16-09-1964<br>30-04-1965<br>26-01-1966<br>01-12-1964<br>29-08-1967 |
| US 2001033959 | A1 | 25-10-2001 | AU<br>WO | 4737701 A<br>0169701 A1 | 24-09-2001<br>20-09-2001 |
| WO 0079623 | A | 28-12-2000 | AU<br>WO | 6802400 A<br>0079623 A1 | 09-01-2001<br>28-12-2000 |
| WO 0052779 | A | 08-09-2000 | US<br>AU<br>WO | 6268077 B1<br>3506700 A<br>0052779 A1 | 31-07-2001<br>21-09-2000<br>08-09-2000 |
| US 4318968 | A | 09-03-1982 | FR<br>EP<br>WO<br>GB<br>JP | 2431195 A1<br>0016792 A1<br>8000284 A1<br>2059673 A ,B<br>56501224 T | 08-02-1980<br>15-10-1980<br>21-02-1980<br>23-04-1981<br>27-08-1981 |

EPO FORM P0461

Für nähere Einzelheiten zu diesem Anhang : siehe Amtsblatt des Europäischen Patentamts, Nr.12/82